# EUROPÄISCHE PATENTANMELDUNG

(11) **EP 2 460 648 A1**
(43) Veröffentlichungstag der Anmeldung: **06.06.2012**
(21) Anmeldenummer: 11190291.2
(22) Anmeldetag: 23.11.2011
(51) Int. Cl.: B29D 11/00, G02C 7/02

(54) **Verfahren zur Herstellung von kostenoptimierten Brillengläsern**

(30) Priorität: 06.12.2010 DE 102010061056
(71) Anmelder: Opto Tech Optikmaschinen GmbH, 35435 Wettenberg (DE)
(72) Erfinder: Mandler, Roland, 35452 Heuchelheim (DE)
(74) Vertreter: Buchhold, Jürgen

(57) **Zusammenfassung**

Die Erfindung betrifft ein Verfahren zum Herstellen von Brillengläsern aus spanlos vorgefertigten Rohlingen, die vorzugsweise aus Kunststoff oder Silikatglas bestehen, mit einer nicht nachzubearbeitenden Vorderseite und einer mittels CNC-Maschine nachzubearbeitenden gegenüberliegenden Rückseite, die gemeinsam wenigstens einen optischen Brennpunkt haben, wobei zur Nachbearbeitung der Rückseite eine Rezeptfläche auf Basis eines, die Sehfehler eines linken und eines rechten Auges beschreibenden, Rezepts eines Rezepteigners, derart berechnet wird, dass die bearbeitete Rückseite gemeinsam mit der Vorderseite eine erste Rezeptlinse und eine zweite Rezeptlinse bildet, wobei aus diesen zwei Brillengläser gefertigt werden, und wobei die Brennpunkte des ersten Brillenglases den Sehfehler des linken Auges und die Brennpunkte des zweiten Brillenglases den Sehfehler des rechten Auges des Rezepteigners korrigieren.

## Beschreibung

Die Erfindung betrifft gemäß dem Oberbegriff von Anspruch 1 ein Verfahren zum Herstellen von Brillengläsern aus spanlos vorgefertigten Rohlingen, die vorzugsweise aus Kunststoff oder Silikatglas bestehen, mit einer nicht nachzubearbeitenden Vorderseite und einer mittels CNC-Maschine nachzubearbeitenden gegenüberliegenden Rückseite, die gemeinsam wenigstens einen optischen Brennpunkt haben.

Brillengläser dienen als Sehhilfe und sind in vielfältiger Form verfügbar. Zwei Brillengläser werden üblicherweise von einem Gestell verbunden und bilden gemeinsam mit diesem eine Brille. Diese kann derart vor zwei Augen positioniert werden, dass vor jedem Auge ein Brillenglas angeordnet ist.

Die Funktion eines Brillenglases basiert auf den physikalischen Eigenschaften einer optischen Linse. Voraussetzung ist ein optisch durchlässiges Material. Eine Vorder- und eine Rückseite des Brillenglases werden derart gefertigt, insbesondere geschliffen, dass diese durch konvexe und konkave Formgebung wenigstens einen optischen Brennpunkt bilden. Die Festlegung des Brennpunktes eines Brillenglases erfolgt in Abhängigkeit eines Sehfehlers einer Person, der mit Hilfe des Brillenglases idealerweise ausgeglichen wird. Dabei wird insbesondere der natürliche Brennpunkt des Auges durch das Brillenglas korrigiert.

Für eine Korrektur von Alterssichtigkeit kann es notwendig sein, dass das Brillenglas mehrere Brennpunkte haben muss. Je nach Entfernung des Objektes wölbt sich die Augenlinse unterschiedlich stark. Bei der Alterssichtigkeit ist diese Elastizität eingeschränkt - die Augenlinse verhärtet und verdickt sich. Dies führt dazu, dass der Sehfehler des Auges bei Objekten in kurzer Distanz zum Auge (Nahsichtbereich) ein anderer ist als der bei weit entfernten Objekten (Weitsichtbereich). Um Objekte in allen Distanzen zum Auge scharf sehen zu können, muss der Brennpunkt des Auges je nach Distanz des Objekts zum Auge durch einen bestimmten Brennpunkt eines Brillenglases korrigiert werden. Naheliegende und klassische Lösung ist es, je nach Distanz des Objekts zum Auge zu einem Brillenglas mit einem anderen Brennpunkt zu wechseln. Es ist jedoch auch möglich ein Brillenglas derart zu gestalten, dass dieses mehrere Brennpunkte in unterschiedlichen Zonen hat. Durch eine derartige Ausgestaltung ist es möglich, dass ein Wechseln des Brillenglases unterbleiben kann und stattdessen durch eine Veränderung der Blickrichtung die Zone des Brillenglases gewechselt wird.

Hat ein Brillenglas zwei unterschiedliche Brennpunkte, in der Regel einen für den Weitsichtbereich und einen für den Nahsichtbereich im unteren Bereich des Brillenglases, so wird dieses als bifokales Brillenglas bezeichnet. Erkennbar sind derartige Gläser zumeist durch einen sichtbaren Übergang zwischen den beiden Bereichen. Sofern der Brennpunkt bei einer Blickwinkeländerung, insbesondere von oben nach unten, mehrfach ein anderer ist, wird von einem multifokalen Brillenglas gesprochen. Dabei kann der Brennpunkt auch kontinuierlich ein anderer sein.

Zur Herstellung von Brillengläsern kommen verschiedene Verfahren zum Einsatz. Im einfachsten Fall wird ein Brillenglas aus einem flachen Rohling in mehreren Arbeitsschritten hergestellt. Dieser Rohling ist eine ebene Scheibe aus Silikatglas oder Kunststoff. Zunächst werden bei diesem Verfahren die gewünschten Geometrien der optischen Flächen auf beiden Seiten des Rohlings durch mechanische Bearbeitung (Drehen, Fräsen, Schleifen) hergestellt. Die erzeugten Oberflächen weisen nach diesem Verfahrensschritt eine große Rautiefe auf und sind optisch undurchlässig. An die Zerspanung schließt sich daher ein Poliervorgang an. Hierbei wird die Rautiefe der Oberflächen soweit verringert, dass Licht nicht mehr unzulässig zerstreut wird und die Linse somit durchsichtig ist. Zusätzlich wird die Außenkontur des Brillenglases durch Bearbeitung der Außenkontur des Rohlings hergestellt.

Preiswerte Standardbrillen haben heute in der Regel standardisierte Linsen. Durch Gießen oder Spritzgießen werden zunächst kreisrunde Rohlingen hergestellt. Die Qualität derartiger Rohlingsoberflächen ist so hoch, dass keine weitere Nachbearbeitung der Oberfläche notwendig ist. Lediglich die Kontur muss an ein vorgesehenes Brillengestell angepasst werden. Derartige Brillengläser haben in der Regel sowohl eine sphärische Vorderseite, als auch eine sphärische Rückseite. Unter sphärisch ist zu verstehen, dass die Oberfläche ein Kugelausschnitt ist, bzw. dass alle Punkte auf einer Oberfläche in einem Abstand Radius R von einem Kugelmittelpunkt M entfernt liegen. Derartig standardisierte Brillengläser sind zwar äußerst preiswert in der Anschaffung, erfüllen jedoch meist nicht die Wünsche an die Sehschärfe im Nah- und Fernbereich, sowie über den gesamten Blickwinkel von oben nach unten und von links nach rechts.

Zur Reduktion dieser Qualitätsmängel werden hochwertigere Brillengläser meistens individualisiert, indem die Augen vermessen werden und berechnet wird, wie ein Brillenglas aufgebaut sein muss, um einen bestehenden Sehfehler eines Auges optimal zu beheben. Das Ergebnis der Berechnung wird üblicherweise von einem Optiker oder Augenarzt dokumentiert und in Form eines Rezepts an denjenigen weitergeleitet, der das Brillenglas aus einem Rohling fertigt. Deshalb wird im Folgenden ein nach Rezept individualisierter Rohling als Rezeptlinse bezeichnet. Aus der Rezeptlinse wird anschließend das Brillenglas durch Bearbeitung der Außenkontur hergestellt.

Um Rezeptlinsen herzustellen, kommen verschiedene Verfahren in Betracht. Aus wirtschaftlichen Gründen haben sich insbesondere Verfahren durchgesetzt, die einen in Großserie gefertigte Rohling durch spanende Verfahren und Polieren individuell nachbearbeiten. Rohlinge aus Kunststoff entstehen in der Regel durch Gießen oder Spritzgießen und Rohlinge aus Silikatglas durch Absenken von erwärmten Glasronden in Formen. Die Qualität derartiger Rohlingsoberflächen, insbesondere der Vorder- und der Rückseite, ist so hoch, dass grundsätzlich keine weitere Nachbearbeitung der Oberfläche notwendig wäre. Allerdings weist ein derartiger Rohling einen oder mehrere standardisierte Brennpunkte auf, die den Sehfehler eines bestimmten Auges häufig nicht optimal korrigieren. Deshalb wird der Rohling oder Teilbereiche von diesem, zum Beispiel nur eine Seite, durch Nachbearbeitung individuell an den Sehfehler eines bestimmten Auges angepasst. Hierfür wird basierend auf den vorderseitigen und rückseitigen Oberflächen des Rohlings und einem Rezept, ein Materialabhub zur Gestaltung der Rezeptlinse berechnet. Die Parameter der Oberflächengeometrie des Rohlings sind für diese Berechnung zwingend erforderlich. Anschließend kann eine Nachbearbeitung auf Vorder- und Rückseite oder nur auf einer Seite erfolgen. Eine einseitige Nachbearbeitung verursacht in der Regel geringere Herstellungskosten als eine zweiseitige, da der Nachbearbeitungsaufwand geringer ist. Wird eine Seite durch Nachbearbeitung individualisiert, handelt es sich um eine so genannte Rezeptfläche.

Die Nachbearbeitung erfolgt heute mit modernen CNC-Fräsmaschinen, sodass auch komplizierte Oberflächengestaltungen realisierbar sind. Die Nachbearbeitung eines Rohlings ist jedoch dahingehend begrenzt, dass sowohl die Stabilität der Linse gewahrt bleiben muss, als auch die Krümmungsradien und die Materialstärke des Rohlings den Änderungen Grenzen auferlegen. Deshalb ist zumindest eine bestimmte Anzahl verschiedenartiger Rohlinge erforderlich, um Brillengläser für eine möglichst große Sehfehlerspanne fertigen zu können. Brillengläser für seltene und extrem starke Sehfehler, die nicht in diese Spanne fallen, müssen durch andere Herstellungsverfahren gefertigt werden, zum Beispiel durch die Herstellung aus einem Materialquader.

Eine Herstellung von individualisierten Brillengläsern aus Rohlingen wird unter anderem in der EP 0744 646 A1 beschrieben. Es kommen verschiedenartige runde Rohlinge zum Einsatz, bei denen eine Seitenfläche bereits fertiggestellt ist. Diese werden durch einen Gieß- oder Spritzgießprozess hergestellt. Dabei ist die Vorderseite des Rohlings konvex und sphärisch ausgebildet. Die Rezeptfläche wird auf Basis eines Rezepts, welches von einem Augenarzt ausgestellt wird, berechnet und anschließend durch Zerspanen und Polieren hergestellt. Sie kann sphärisch, torisch oder multifokal sein. Die gewünschten optischen Eigenschaften des Brillenglases ergeben sich letztlich in Kombinationen der standardisierten sphärischen Vorderseite und der Rezeptseite und entsprechen dem vorgegebenen Rezept. Anschließend wird die Kontur der Rezeptlinse an die Geometrie eines gewählten Brillengestells angepasst.

Auch DE 197 01 312 A1 beschreibt eine Herstellung von individualisierten Brillengläsern. Dabei wird ein Rohling ausschließlich auf der Rückseite nachbearbeitet. Das bedeutet, dass die Rezeptfläche auf der Rückseite des Rohlings liegt. Die Vorderseite hingegen bleibt unverändert und ist sphärisch oder asphärisch. Eine asphärische Oberfläche ist dadurch gekennzeichnet, dass sie von einer mathematischen Funktion nach DIN ISO 10110-12 beschrieben werden kann. Dabei verändert sich der Radius kontinuierlich von einer Mittelachse nach außen. Die Rückseite des Brillenglases wird nach Rezept als multifokale Freiformfläche berechnet und durch Nachbearbeitung erstellt. Anschließend wird die Kontur der Rezeptlinse an die Geometrie eines gewählten Brillengestells angepasst.

DE 101 03 113 A1 beschreibt ebenfalls eine rotationssymmetrische und insbesondere sphärische Vorderseite eines runden Rohlings, ohne diese jedoch weiter auszuführen.

Aus einer Rezeptfertigung nach EP 0744 646 A1, DE 197 01 312 A1 und DE 101 03 113 A1 ergeben sich bei bestimmten Brillengestellen jedoch erhebliche Nachteile. Insbesondere moderne schmale Brillengläser nehmen nur einen geringen Teil der Rohlingsfläche ein. Es entsteht bei der Fertigung somit ein großer Verschnitt. Obwohl derartige Brillengläser klein sind, entsprechen die Herstellungskosten deshalb denen größerer Gläser. Zudem muss für die Herstellung zweier Brillengläser zweimal ein Rohling in eine CNC-Maschine eingebracht werden, wofür Zeit aufgewendet werden muss, was Kosten verursacht.

Aufgabe der Erfindung ist die Wirtschaftlichkeit bei der Fertigung von Brillengläsern zu steigern. Insbesondere soll hierfür der Verschnitt und der Arbeitsaufwand reduziert werden. Dabei ist zu beachten, dass modische Anforderungen an die Geometrie der Vorderseite bestehen. Idealerweise sollte die Anzahl an unterschiedlichen Rohlingen begrenzt sein, um die Vorhaltekosten gering zu halten. Auch die weiteren Nachteile des Stands der Technik sollen behoben werden.

Hauptmerkmale der Erfindung sind im kennzeichnenden Teil von Anspruch 1 angegeben. Ausgestaltungen sind Gegenstand der Ansprüche 2 bis 15.

Die Erfindung betrifft ein Verfahren zum Herstellen von Brillengläsern aus spanlos vorgefertigten Rohlingen, die vorzugsweise aus Kunststoff oder Silikatglas bestehen, mit einer nicht nachzubearbeitenden Vorderseite und einer mittels CNC-Maschine nachzubearbeitenden gegenüberliegenden Rückseite, die gemeinsam wenigstens einen optischen Brennpunkt haben, wobei zur Nachbearbeitung der Rückseite eine Rezeptfläche auf Basis eines, die Sehfehler eines linken und eines rechten Auges beschreibenden, Rezepts eines Rezepteigners, derart berechnet wird, dass die bearbeitete Rückseite gemeinsam mit der Vorderseite eine erste Rezeptlinse und eine zweite Rezeptlinse bildet, wobei aus diesen zwei Brillengläser gefertigt werden, und wobei die Brennpunkte des ersten Brillenglases den Sehfehler des linken Auges und die Brennpunkte des zweiten Brillenglases den Sehfehler des rechten Auges des Rezepteigners korrigieren.

Somit haben die Brillengläser ein optisches Zentrum, durch welches ein Brillenträger bei einem Geradeausblick schaut (Nullblickrichtung), welches nicht mit der Mittelachse des Rohlings übereinstimmt.

Rohlinge aus Kunststoff könnten durch Gießen oder Spritzgießen und Rohlinge aus Silikatglas durch Absenken von erwärmten Glasronden in Formen hergestellt werden. Die Qualität der Rohlingsoberfläche sollte dabei so hoch sein, dass grundsätzlich keine weitere Nachbearbeitung der Vorder- und Rückseite notwendig ist. Auf diese Weise kann der Rohling auch ohne Nachbearbeitung der Vorder- und der Rückseite an ein Brillengestell angepasst werden und von einer Person mit einem Sehfehler zur Korrektur von diesem genutzt werden.

Ein Rezept ist jede Informationsquelle über einen Sehfehler. Es muss sich hierbei nicht um ein schriftliches Dokument eines Arztes oder Optikers handeln. Basierend auf den vorderseitigen und rückseitigen Oberflächen des Rohlings, kann der Materialabhub zur Gestaltung der Rezeptfläche berechnet werden. Die Parameter der Oberflächengeometrie von Vorder- und Rückseite des Rohlings sind für diese Berechnung zwingend erforderlich. Anschließend kann eine Nachbearbeitung der Rückseite zur Rezeptfläche erfolgen. Eine solche einseitige Nachbearbeitung verursacht in der Regel geringere Herstellungskosten als eine zweiseitige.

Die Nachbearbeitung der Rückseite erfolgt mit modernen CNC-Maschinen. Zunächst wird die Rezeptfläche durch mechanische Bearbeitung (Drehen, Fräsen, Schleifen) hergestellt. Da eine derart erzeugte Oberfläche in der Regel eine zu große Rautiefe aufweist, ist sie optisch undurchlässig. Deshalb schließt sich an die Zerspanung in der Regel ein Poliervorgang an. Hierbei wird die Rautiefe der Oberflächen soweit verringert, dass Licht nicht mehr unzulässig zerstreut wird und die Linse somit durchsichtig ist.

Nach der Bearbeitung der Rückseite zu einer Rezeptfläche, ist lediglich noch die Kontur der nunmehr in dem bearbeiteten Rohling liegenden zwei Rezeptlinsen an ein vorgesehenes Brillengestell anzupassen. Dieser Arbeitsschritt könnte jedoch auch vor oder während der Bearbeitung der Rückseite erfolgen.

Da zwei Brillengläser aus einem Rohling gefertigt werden, trägt der erfindungsgemäße Rohling dazu bei, dass geringe Lager- und Transportkosten entstehen, sowie die Umwelt durch geringen Verschnitt geschont wird. Insbesondere Brillenglasgeometrien, die sich zuvor nur über einen kleinen Bereich eines Rohlings erstreckten und hohen Verschnitt verursachten, können nunmehr preiswert und schnell gefertigt werden, da nur ein Rohling in die CNC-Maschine eingebracht werden muss und ein größerer Teil des Rohlings genutzt wird.

Die Vorderseite des Rohlings wird bevorzugt derart gestaltet, dass sie sphärisch, asphärisch oder eine konvexe und rotationssymmetrische erste Freiformfläche ist, die sich von einer Mittelachse nach außen aus wenigstens zwei sphärischen Abschnitten unterschiedlicher Radien zusammensetzt und die sphärischen Abschnitte tangential in einem Sphärenübergang aneinandergrenzen.

Eine sphärische Gestaltung erfordert einen geringen Berechnungsaufwand. Zudem können die Brillengläser beliebig auf dem Rohling positioniert werden, ohne dass sich deren Geometrie, insbesondere die der Vorderseite, verändert. Dahingegen entspricht die Geometrie einer asphärischen Vorderseite eher den ästhetischen Wünschen eines Brillenträgers.

Bei einer Freiformfläche sind die Tangenten der aneinandergrenzenden Sphären in dem Punkt gleich, in dem sie sich berühren. Somit bestehen keine Knicke auf der Vorderseite und jeder Punkt auf der Vorderseite ist mathematisch differenzierbar. Dass heißt, jeder Punkt auf der Vorderseite hat nur einen Ebenennormalenvektor. Dabei ist von einer makroskopischen Oberfläche auszugehen und nicht von einer mikroskopischen. Aufgrund der Rotationssymmetrie, liegt der Sphärenmittelpunkt der Sphäre, die der Mittelachse am nächsten liegt, auf der Mittelachse.

Die Anzahl der Sphären, die gemeinsam die Vorderseite bilden, kann beliebig gewählt werden, sodass auch Gleitsicht-Brillengläser herstellbar sind. Die Rotationssymmetrie kann bei jeder Anzahl von Sphären gewahrt bleiben.

Dadurch, dass aneinandergrenzende Sphären tangential in einem Sphärenübergang zueinander angeordnet sind, wird ein harmonischer Übergang zwischen zwei Sphären gewährleistet, was beim Tragen der Sehhilfe vom Brillenträger als angenehm empfunden wird. Zudem hat dies auch ästhetische Vorteile, denn es sind folglich keine Kanten auf der Vorderseite eines derartig hergestellten Brillenglases vorhanden, an denen Licht abrupt unterschiedlich brechen könnte. Insgesamt erhält das Brillenglas durch die Anordnung der Sphären auch einen dynamisch-sportlichen Charakter. Ein solches Brillenglas wirkt für äußere Betrachter harmonisch. Weiterhin wird die Rückseite des Rohlings gemäß einer Ausgestaltung des Verfahrens derart gestaltet, dass sie sphärisch, asphärisch oder eine konkave und rotationssymmetrische zweite Freiformfläche ist, die sich von einer Mittelachse nach außen aus wenigstens zwei sphärischen Abschnitten unterschiedlicher Radien zusammensetzt und die sphärischen Abschnitte tangential in einem Sphärenübergang aneinandergrenzen.

Die Rückseite sollte derart auf die Vorderseite ausgelegt werden, dass die Geometrie des Rohlings möglichst nahe am Endergebnis der Rezeptlinsen liegt. Der Nachbearbeitungsaufwand ist somit reduziert, da ein geringerer Materialabhub erforderlich ist. Hierdurch werden minimale Herstellungskosten erreicht und maximal zum Schutz der Umwelt beigetragen.

Vorzugsweise hat ein näher an der Mittelachse angeordneter sphärischer Abschnitt einen größeren Radius als ein weiter von der Mittelachse entfernter sphärischer Abschnitt.

Bei einer solchen Freiformfläche nimmt die Krümmung des Rohlings mit zunehmendem Abstand von der Mittelachse zu. Dies hat Vorteile hinsichtlich der Ästhetik und auch Unschärfen im Randbereich können so reduziert werden, da keine konvexen und flachen Bereiche in der Rezeptfläche notwendig sind, die mit der Vorderseite korrespondiert.

Hierdurch kann die Rezeptfläche im Wesentlichen derart gestaltet werden, dass ein Brillenträger in jedem Blickwinkel möglichst senkrecht auf sie blickt. Idealerweise würden die Ebenennormalenvektoren der Rezeptfläche in jeder Blickrichtung auf einer Achse mit dieser liegen. Der Brillenträger würde demnach immer senkrecht auf die Glasfläche blicken. Die Rezeptfläche basiert jedoch in erster Linie auf den Rezeptdaten. Um das Erfordernis des senkrechten Blickwinkels trotzdem zu erfüllen, muss deswegen bereits die Vorderseite derart gestaltet sein, dass die korrespondierende Rückseite dieses Erfordernis erreicht. Die Anordnung mehrer Sphären auf der Vorderseite hilft hierbei und gleichzeitig muss die Vorderseite nicht derart geformt werden, dass sie den Anforderungen an die Ästhetik nicht mehr genügt.

Eine besondere Variante des Verfahrens sieht vor, dass der Rohling derart gestaltet wird, dass dieser aus zwei aneinander gereihten Ausschnitten besteht.

Auf diese Weise lassen sich beispielsweise zwei rechteckige Ausschnitte aus rotationssymmetrischen Rohlingen zu einem rechteckigen Rohling zusammensetzen. Aus jedem Ausschnitt lässt sich nun ein Brillenglas fertigen. Insbesondere bei eckigen Brillengläsern lässt sich so ein Großteil des Verschnitts vermeiden und es entstehen geringere Material- und Logistikkosten. Zudem muss nur ein Rohling für die Herstellung von zwei Brillengläsern in die CNC-Maschine eingebracht werden, wodurch die Herstellungskosten gering sind.

Bevorzugt wird der Ausschnitt derart aus einem rotationssymmetrischen sphärischen, asphärischen oder freigeformten Rohling gebildet, dass dieser die Außengeometrie eines Brillenglases zuzüglich eines Bearbeitungsüberstands ist. Somit wird eine minimale Größe des Rohlings für zwei Brillengläser erreicht. Lediglich die für die Bearbeitung notwendigen Überstände sind vorzusehen, so zum Beispiel zwischen den zwei Brillengläsern, um diese von einander trennen zu können.

Gemäß einer Ausgestaltung des Verfahrens hat der Rohling eine kreisförmige oder eine eckige Außenkontur. Die Rohlinge sind in der Regel kreisförmig. Der äußere Rand der Rohlinge kann jedoch auch ein Ausschnitt aus einem kreisförmigen Rohling sein, der eine von der Kreisform abweichende Form hat. Der äußere Zuschnitt ist unerheblich, entscheidend ist, ob ein nicht kreisförmiger Rohling aus einem oder mehreren Ausschnitten aus einem rotationssymmetrischen Rohling gewonnen werden kann. Eine viereckige Form der Rohlinge könnte beispielsweise von Vorteil sein, wenn die meisten verkauften Brillengläser aufgrund eines Modetrends ebenfalls viereckig sind. Hierdurch würde der Abfall, der sich aus der Anpassung der Roh- oder Rezeptlinse an das Brillengestell ergibt, verringert werden.

Die Erfindung kann vorsehen, dass die Vorderseite und die Rezeptfläche derart gestaltet werden, dass sie zusammen, nach Fertigung der zwei Brillengläser aus den Rezeptlinsen, wenigstens zwei bifokale Brillengläser, vorzugsweise jedoch zwei multifokale Brillengläser bilden.

Multifokale Brillengläser finden bei heutigen Brillenträgern größeren Zuspruch. Dies liegt vor allem an einem höheren Sehkomfort ohne harten Übergang, der eine verbesserte Korrektur des Sehfehlers bei verschiedenen Abständen von Gegenständen zum Auge ermöglicht. Für Aufgaben, bei denen zwei bestimmte Abstände zum Auge regelmäßig auftreten, werden jedoch auch noch häufig Brillen mit bifokalen Brillengläsern getragen.

Vorteilhafter Weise werden mehrere unterschiedliche Rohlinge gefertigt, die unterschiedliche Krümmungen auf der Vorderseite und der Rückseite aufweisen, wobei die Vorderseite und die Rückseite wenigstens einen Brennpunkt bilden, der durch eine Nachbearbeitung der Rückseite zu einer Rezeptfläche nur beschränkt verändert werden kann, wobei die Krümmungen der unterschiedlichen Rohlinge derart gestaffelt werden, dass passend gestaffelte Rohlinge für alle typischen Brillengläser verfügbar sind.

Dabei ist jedoch zu beachten, dass zwar die Bearbeitungszeit zur Erstellung der Rezeptlinsen bei steigender Anzahl an unterschiedlichen Rohlingen sinkt, dagegen steigen jedoch die Lagerhaltungs- und Logistikkosten. Durch die unterschiedlichen Rohlinge können für eine hohe Bandbreite an Sehfehlern kostengünstige Brillengläser angeboten werden, mit zudem hoher Qualität hinsichtlich Ästhetik und Funktionalität.

Die Staffelung der Rohlinge könnte dabei derart ausgelegt werden, dass die Nachbearbeitungszeit der Rückseite minimiert wird, indem der Materialabhub bei der Fertigung der Rezeptfläche gering ist. Durch die geringere Nachbearbeitungszeit sinken die Herstellungskosten der Brillengläser.

Die zwei Brillengläser werden bevorzugt durch ein Waterjet- oder Laserverfahren oder durch Zerspanung, insbesondere Fräsen, aus den zwei Rezeptlinsen herausgetrennt.

Das verwendete Werkzeug muss zwischen den beiden Brillengläsern arbeiten können. Je dichter die beiden Gläser aneinander angeordnet sind, desto feiner muss die Trennung erfolgen, damit die Brillengläser nicht beschädigt werden. Klassische Fräser haben einen Mindestdurchmesser des Fräskopfes, der einen etwas höheren Abstand zwischen den Brillengläsern erfordert. Vorteilhaft ist dem Fräsverfahren, dass derartige Werkzeuge regelmäßig verfügbar sind. Waterjet- oder Laserverfahren können schmälere Schnitte realisieren und sind schneller. Den hierdurch geringeren Herstellungskosten der Brillengläser steht jedoch ein höheres Investment für die Maschinen gegenüber. Vorteilhaft ist, dass ein Verfahren gewählt werden kann, das entsprechend der im Jahr herzustellenden Brillengläser die geringsten Kosten verursacht.

Beim Heraustrennen kann hierbei ein kleiner Bearbeitungsüberstand am Brillenglas belassen werden. Sofern die Kanten nachbearbeitet werden müssen, ist ein solcher Überstand vorzusehen. Auf diese Weise ist die Geometrie genau an ein vorgesehenes Brillengestell anpassbar und die Qualität der Kanten kann erhöht werden.

Hierfür sollte der Bearbeitungsüberstand durch Schleifen und Polieren nachbearbeitet werden. Durch das Schleifen wird zunächst die endgültige Geometrie hergestellt, bevor mittels Polieren eine Lichtdurchlässigkeit auch an den Kanten erzeugt wird. Dies hat insbesondere ästhetische Vorzüge, die bei rahmenlosen Brillengestellen besonders zum Tragen kommen. Erfindungsgemäß kann eine spiegelverkehrte und somit optisch harmonische Vorderseite von zwei Brillengläsern hergestellt werden, indem die beiden Oberkanten oder die beiden Unterkanten der Brillengläser vor der Fertigung aus den Rezeptlinsen benachbart sind. Vor allem aus Rohlingen, deren Vorderseite mit zunehmendem Abstand von der Mittelachse stärker gekrümmt ist, können so ästhetisch symmetrische Brillengläser hergestellt werden. Die näher an der Mittelachse angeordneten Kanten sind dabei weniger stark gekrümmt. Aus ästhetischen Anforderungen ist deshalb zumeist eine benachbarte Anordnung der Oberkanten zu bevorzugen.

Zur Herstellung der Brillengläser kann der Rohling derart in einer Werkzeugaufnahme fixiert werden, dass die Brillengläser nach der Herstellung aus den Rezeptlinsen an der Werkzeugaufnahme fixiert sind. Das heißt, dass im Bereich der Fläche der Vorderseite, die später zu einem Brillenglas gehört, eine Fixierung erfolgt. Beide Brillengläser sind so nach dem Heraustrennen noch an der Werkzeugaufnahme fixiert und nehmen keinen Schaden durch eine unkontrollierte Bewegung. Zudem können die weiteren Arbeitsschritte wie ein Polieren der Rückseite und der Kanten unmittelbar fortgesetzt werden.

Zudem könnte die Werkzeugaufnahmeoberfläche derart gestaltet werden, dass sie ein Negativabbild der Vorderseite eines Rohlings ist. Dadurch wäre der erfindungsgemäße Rohling bei der Herstellung der Brillengläser ideal gestützt.

Es bestünde auch die Möglichkeit die Werkzeugaufnahme derartig teilbar zu gestalten, dass ab dem Heraustrennen die zwei Brillengläser unabhängig von einander weiterbearbeitet werden können. Dies erhöht die Bearbeitungszugänglichkeit für Werkzeuge, vor allem bei der Bearbeitung der Kanten.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: Einen Rohling mit einer sphärischen Vorder- und Rückseite mit angeordneten Brillengläsern;
- Fig. 2: einen Rohling mit einer freigeformter Vorder- und Rückseite mit angeordneten Brillengläsern, wobei die Vorder- und Rückseite aus tangential aneinander grenzenden Sphären bestehen;
- Fig. 3: eine Ausgangssituation zur Bildung eines Ausschnitts aus einem runden Rohling; und
- Fig. 4: einen Rohling bestehend aus zwei Ausschnitten.

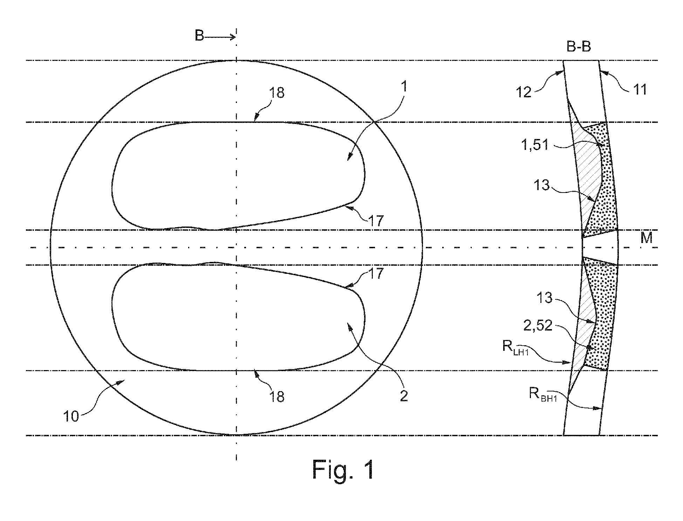

Figur 1 zeigt einen runden Rohling 10 für ein erfindungsgemäßes Verfahren zum Herstellen von Brillengläsern 1,2. Dieser kann aus Kunststoff oder Silikatglas bestehen. In dem Rohling 10 sind ein erstes Brillenglas 1 und ein zweites Brillenglas 2 derart angeordnet, dass deren Oberkanten 17 benachbart sind. Diese sind somit näher an einer Mittelachse M des Rohlings 10 angeordnet als die Unterkanten 18 der Brillengläser 1,2.

Schnitt B-B ist entnehmbar, dass der Rohling 10 eine Vorderseite 11 mit einem Radius R_{BH1} und eine Rückseite mit einem Radius R_{LH1} hat. Die Rückseite 12 wird weiterhin derart mit einer CNC-Maschine zerspanend bearbeitet, dass eine Rezeptfläche 13 entsprechend einer rezeptbasierten Berechnung des ersten Brillenglases 1 und des zweiten Brillenglases 2 hergestellt wird. Somit sind anschließend eine erste Rezeptlinse 51 und eine zweite Rezeptlinse 52 im bearbeiteten Rohling 10 angeordnet. Anschließend können das erste Brillenglas 1 aus dem Bereich der ersten Rezeptlinse 51, sowie das zweite Brillenglas 2 aus dem Bereich der zweiten Rezeptlinse 52 herausgetrennt werden. Vor oder nach dem Heraustrennen kann die Rezeptfläche 13 poliert werden, damit sie optisch durchlässig ist. Die Brennpunkte des ersten Brillenglases 1 können nun den Sehfehler des linken Auges und die Brennpunkte des zweiten Brillenglases 2 den Sehfehler des rechten Auges eines Rezepteigners korrigieren.

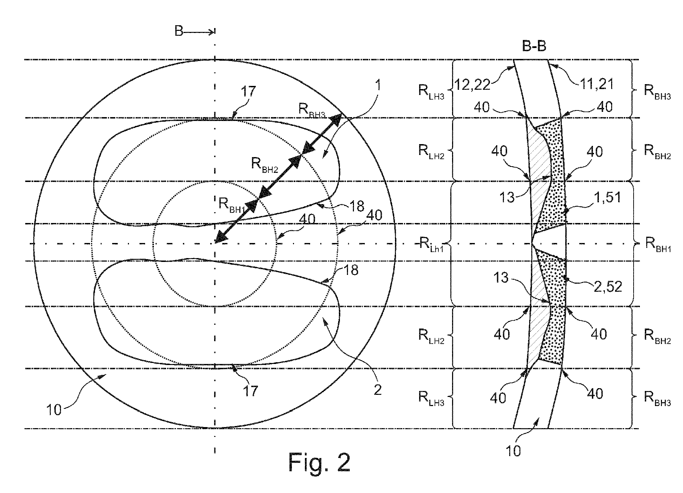

Figur 2 stellt ebenfalls einen runden Rohling 10 für ein erfindungsgemäßes Verfahren zum Herstellen von Brillengläsern dar. Dieser kann aus Kunststoff oder Silikatglas bestehen. In dem Rohling 10 sind ein erstes Brillenglas 1 und ein zweites Brillenglas 2 derart angeordnet, dass deren Unterkanten 18 benachbart sind. Diese sind somit näher an einer Mittelachse M des Rohlings 10 angeordnet als die Oberkanten 17 der Brillengläser 1,2.

Schnitt B-B ist entnehmbar, dass der Rohling 10 eine Vorderseite 11 mit einer ersten Freiformfläche 21 und eine Rückseite 12 mit einer zweiten Freiformfläche 22 hat. Dabei besteht die erste Freiformfläche 21 aus drei sphärischen Abschnitten unterschiedlicher Radien R_{BH1}, R_{BH2}, R_{BH3}, die rotationssymmetrisch um die Mittelachse M angeordnet sind. Diese sphärischen Abschnitte grenzen tangential in Sphärenübergängen 40 aneinander. Auch die zweite Freiformfläche 22 besteht aus drei sphärischen Abschnitten unterschiedlicher Radien R_{LH1}, R_{LH2}, R_{LH3}, die rotationssymmetrisch um die Mittelachse M angeordnet sind und tangential in Sphärenübergängen 40 aneinandergrenzen. Die näher an der Mittelachse M angeordneten sphärischen Abschnitte haben dabei einen größeren Radius hat als ein weiter von der Mittelachse M entfernter sphärischer Abschnitte. Dass heißt R_{BH1} > R_{BH2} > R_{BH3} und R_{LH1} > R_{LH2} > R_{LH3}.

Die Rückseite 12 ist weiterhin derart mit einer CNC-Maschine zerspanend bearbeitbar, dass eine Rezeptfläche 13 entsprechend einer rezeptbasierten Berechnung des ersten Brillenglases 1 und des zweiten Brillenglases 2 herstellbar ist. Somit ist anschließend eine erste Rezeptlinse 51 und eine zweite Rezeptlinse 52 im bearbeiteten Rohling 10 angeordnet. Anschließend könnte das erste Brillenglas 1 aus dem Bereich der ersten Rezeptlinse 51 und das zweite Brillenglas 2 aus dem Bereich der zweiten Rezeptlinse 52 herausgetrennt werden. Die Brennpunkte des ersten Brillenglases 1 korrigieren dann den Sehfehler des linken Auges und die Brennpunkte des zweiten Brillenglases 2 den Sehfehler des rechten Auges eines Rezepteigners.

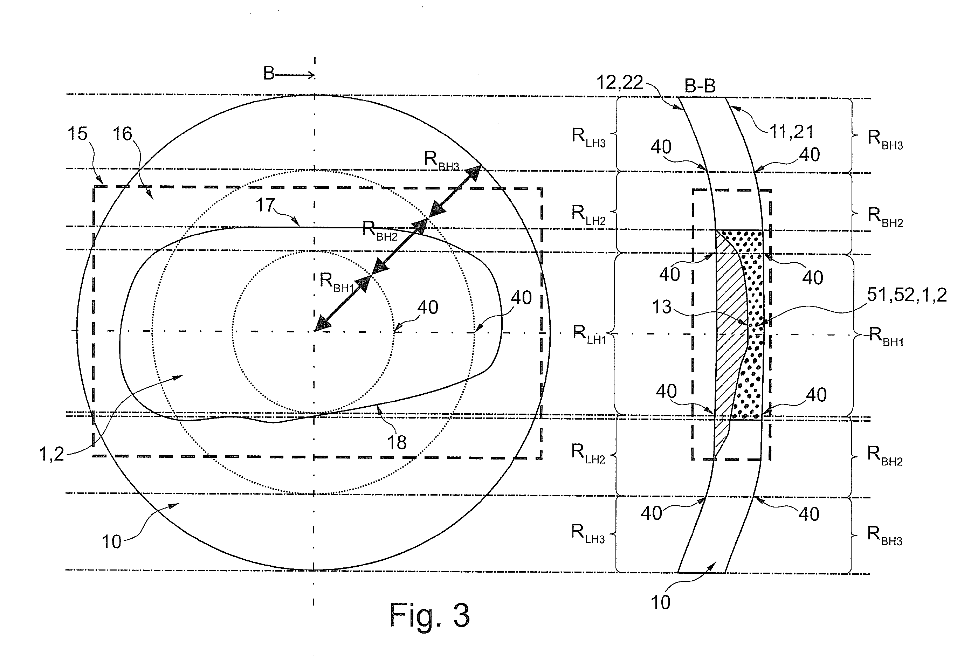

Figur 3 zeigt einen runden Rohling 10 für ein erfindungsgemäßes Verfahren zum Herstellen von Brillengläsern. Dieser kann aus Kunststoff oder Silikatglas bestehen. In dem Rohling 10 ist ein erstes Brillenglas 1 oder ein zweites Brillenglas 2 angeordnet. Eine Mittelachse M des Rohlings 10 liegt zwischen einer Oberkante 17 und der Unterkante 18 der Brillengläser 1,2.

Schnitt B-B ist entnehmbar, dass der Rohling 10 eine Vorderseite 11 mit einer ersten Freiformfläche 21 und eine Rückseite 12 mit einer zweiten Freiformfläche 22 hat. Dabei besteht die erste Freiformfläche 21 aus drei sphärischen Abschnitten unterschiedlicher Radien R_{BH1}, R_{BH2}, R_{BH3}, die rotationssymmetrisch um die Mittelachse M angeordnet sind. Diese sphärischen Abschnitte grenzen tangential in Sphärenübergängen 40 aneinander. Auch die zweite Freiformfläche 22 besteht aus drei sphärischen Abschnitten unterschiedlicher Radien R_{LH1}, R_{LH2}, R_{LH3}, die rotationssymmetrisch um die Mittelachse M angeordnet sind und tangential in Sphärenübergängen 40 aneinandergrenzen. Die näher an der Mittelachse M angeordneten sphärischen Abschnitte haben dabei einen größeren Radius hat als ein weiter von der Mittelachse M entfernter sphärischer Abschnitt. Dass heißt R_{BH1} > R_{BH2} > R_{BH3} und R_{LH1} > R_{LH2} > R_{LH3}.

Die Rückseite 12 ist weiterhin derart mit einer CNC-Maschine zerspanend bearbeitbar, dass eine Rezeptfläche 13 entsprechend einer rezeptbasierten Berechnung des ersten Brillenglases 1 oder des zweiten Brillenglases 2 herstellbar ist. Somit ist anschließend eine erste Rezeptlinse 51 oder eine zweite Rezeptlinse 52 im bearbeiteten Rohling 10 angeordnet. Anschließend könnte das erste Brillenglas 1 aus dem Bereich der ersten Rezeptlinse 51 oder das zweite Brillenglas 2 aus dem Bereich der zweiten Rezeptlinse 52 herausgetrennt werden. Die Brennpunkte des ersten Brillenglases 1 können nun den Sehfehler des linken Auges oder die Brennpunkte des zweiten Brillenglases 2 den Sehfehler des rechten Auges eines Rezepteigners korrigieren.

Diese Anordnung dient zunächst der Festlegung eines Ausschnitts 15 zur Bildung einer Rohlings 10. Die Außengeometrie des Ausschnitts 15 ist rechteckig und umfasst das Brillenglas 1,2 zuzüglich eines Bearbeitungsüberstands 16. Überstände des Rohlings 10, die über die Außengeometrie des Ausschnitts 15 hinausgehen, werden bei der Bildung eines Rohlings 10 nicht berücksichtigt.

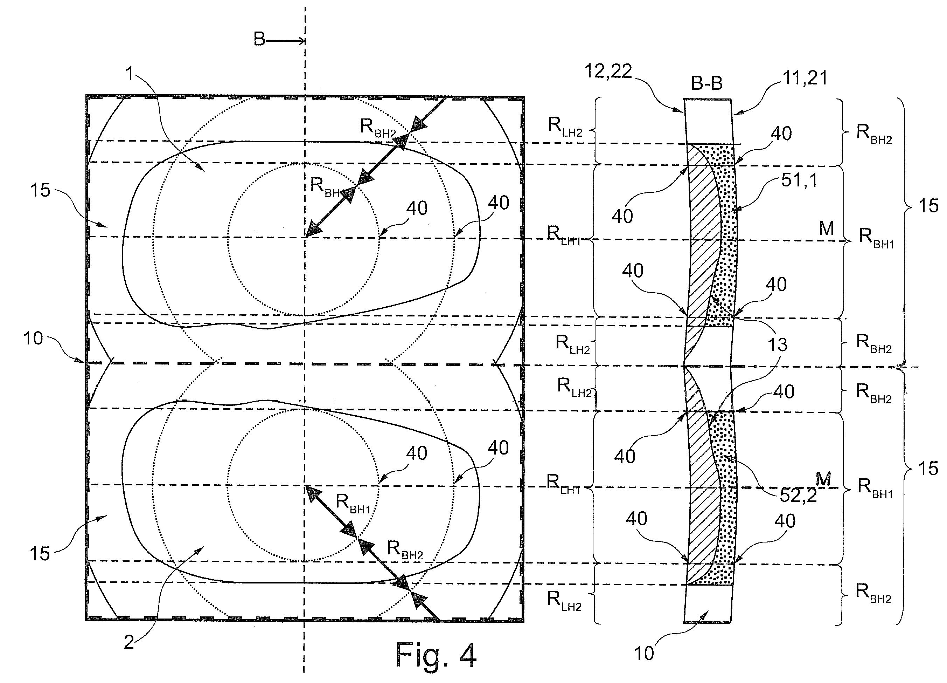

Figur 4 stellt einen erfindungsgemäßen einteiligen rechteckigen Rohling 10 dar, der zwei Ausschnitte 15 beinhaltet. Der Rohling 10 kann aus Kunststoff oder Silikatglas bestehen und in diesem sind ein erstes Brillenglas 1 und ein zweites Brillenglas 2 angeordnet.

Der Darstellung ist entnehmbar, dass die Ausschnitte 15 jeweils eine Vorderseite 11 mit einer ersten Freiformfläche 21 und eine Rückseite 12 mit einer zweiten Freiformfläche 22 haben. Dabei bestehen die ersten Freiformflächen 21 jeweils aus drei sphärischen Abschnitten unterschiedlicher Radien R_{BH1}, R_{BH2}, R_{BH3}, die rotationssymmetrisch um eine Mittelachse M angeordnet sind. Diese sphärischen Abschnitte grenzen tangential in Sphärenübergängen 40 aneinander. Auch die zweiten Freiformflächen 22 bestehen jeweils aus drei sphärischen Abschnitten unterschiedlicher Radien R_{LH1}, R_{LH2}, R_{LH3}, die rotationssymmetrisch um eine Mittelachse M angeordnet sind und tangential in Sphärenübergängen aneinandergrenzen. Die näher an der Mittelachse M angeordneten sphärischen Abschnitte haben dabei einen größeren Radius hat als ein weiter von der Mittelachse M entfernter sphärischer Abschnitt. Dass heißt R_{BH1} > R_{BH2} > R_{BH3} und R_{LH1} > R_{LH2} > R_{LH3}. An der Grenze zwischen den beiden Ausschnitten 15 kann auf der Vorderseite 11 und/oder der Rückseite 12 ein Radius vorgesehen sein, der einen scharfen Knick in der Oberfläche vermeidet. So kann ein Brechen des Rohlings 10 verhindert werden.

Die Rückseite 12 wird weiterhin derart mit einer CNC-Maschine materialabtragend bearbeitet, dass eine Rezeptfläche 13 entsprechend einer Berechnung mittels eines Rezepts des ersten Brillenglases 1 und des zweiten Brillenglases 2 hergestellt werden. Somit ist anschließend eine erste Rezeptlinse 51 und eine zweite Rezeptlinse 52 im bearbeiteten Rohling 10 angeordnet. Anschließend können das erste Brillenglas 1 aus dem Bereich der ersten Rezeptlinse 51 und das zweite Brillenglas 2 aus dem Bereich der zweiten Rezeptlinse 52 herausgetrennt werden. Die Brennpunkte des ersten Brillenglases 1 können nun den Sehfehler des linken Auges und die Brennpunkte des zweiten Brillenglases 2 den Sehfehler des rechten Auges eines Rezepteigners korrigieren.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: erstes Brillenglas
- 2: zweites Brillenglas

- 10: Rohling
- 11: Vorderseite
- 12: Rückseite
- 13: Rezeptfläche
- 15: Ausschnitt
- 16: Bearbeitungsüberstand
- 17: Oberkante
- 18: Unterkante

- 21: erste Freiformfläche
- 22: zweite Freiformfläche

- 40: Sphärenübergang

- 51: erste Rezeptlinse
- 52: zweite Rezeptlinse

- R_{BH1} - R_{BHn}: Sphärenradien der ersten Freiformfläche
- R_{LH1} - R_{LHn}: Sphärenradien der zweiten Freiformfläche

- M: Mittelachse

## Patentansprüche

1. Verfahren zum Herstellen von Brillengläsern (1,2) aus spanlos vorgefertigten Rohlingen (10), die vorzugsweise aus Kunststoff oder Silikatglas bestehen, mit einer nicht nachzubearbeitenden Vorderseite (11) und einer mittels CNC-Maschine nachzubearbeitenden gegenüberliegenden Rückseite (12), die gemeinsam wenigstens einen optischen Brennpunkt haben, **dadurch gekennzeichnet, dass** zur Nachbearbeitung der Rückseite (12) eine Rezeptfläche (13) auf Basis eines, die Sehfehler eines linken und eines rechten Auges beschreibenden, Rezepts eines Rezepteigners, derart berechnet wird, dass die bearbeitete Rückseite (12) gemeinsam mit der Vorderseite (11) eine erste Rezeptlinse (51) und eine zweite Rezeptlinse (52) bilden, wobei aus diesen zwei Brillengläser (1,2) gefertigt werden, und wobei die Brennpunkte des ersten Brillenglases (1) den Sehfehler des linken Auges und die Brennpunkte des zweiten Brillenglases (2) den Sehfehler des rechten Auges des Rezepteigners korrigieren.

2. Verfahren nach Anspruch 1, **dadurch gekennzeichnet, dass** die Vorderseite (11) des Rohlings (10) derart gestaltet wird, dass sie sphärisch, asphärisch oder eine konvexe und rotationssymmetrische erste Freiformfläche (21) ist, die sich von einer Mittelachse (M) nach außen aus wenigstens zwei sphärischen Abschnitten unterschiedlicher Radien (R_{BH1} - R_{BHn}) zusammensetzt und die sphärischen Abschnitte tangential in einem Sphärenübergang (40) aneinandergrenzen.

3. Verfahren nach einem der Ansprüche 1 oder 2, **dadurch gekennzeichnet, dass** die Rückseite (12) des Rohlings (10) derart gestaltet wird, dass sie sphärisch, asphärisch oder eine konkave und rotationssymmetrische zweite Freiformfläche (22) ist, die sich von einer Mittelachse (M) nach außen aus wenigstens zwei sphärischen Abschnitten unterschiedlicher Radien (R_{LH1} - R_{LHn}) zusammensetzt und die sphärischen Abschnitte tangential in einem Sphärenübergang (40) aneinandergrenzen.

4. Verfahren nach einem der Ansprüche 2 oder 3, **dadurch gekennzeichnet, dass** ein näher an der Mittelachse (M) angeordneter sphärischer Abschnitt einen größeren Radius hat als ein weiter von der Mittelachse (M) entfernter sphärischer Abschnitt.

5. Verfahren nach Anspruch 1, **dadurch gekennzeichnet, dass** der Rohling (10) derart gestaltet wird, dass dieser aus zwei aneinander gereihten Ausschnitten (15) besteht.

6. Verfahren nach Anspruch 5, **dadurch gekennzeichne**t, **dass** der Ausschnitt (15) derart aus einem rotationssymmetrischen sphärischen, asphärischen oder freigeformten Rohling (10) gebildet wird, dass dieser die Außengeometrie eines Brillenglases (1) zuzüglich eines Bearbeitungsüberstands ist.

7. Verfahren nach einem der vorhergehenden Ansprüche, **dadurch gekennzeichnet, dass** der Rohling (10) eine kreisförmige oder eine eckige Außenkontur hat.

8. Verfahren nach einem der vorhergehenden Ansprüche, **dadurch gekennzeichnet, dass** die Vorderseite (11) und die Rezeptfläche (13) derart gestaltet werden, dass sie zusammen, nach Fertigung der zwei Brillengläser (1,2) aus den Rezeptlinsen (51,52), wenigstens zwei bifokale Brillengläser (1,2), vorzugsweise jedoch zwei multifokale Brillengläser (1,2) bilden.

9. Verfahren nach einem der vorhergehenden Ansprüche, **dadurch gekennzeichnet, dass** mehrere unterschiedlicher Rohlinge (10) gefertigt werden, die unterschiedliche Krümmungen auf der Vorderseite (11) und der Rückseite (12) aufweisen, wobei die Vorderseite (11) und die Rückseite (12) wenigstens einen Brennpunkt bilden, der durch eine Nachbearbeitung der Rückseite (12) zu einer Rezeptfläche (13) nur beschränkt verändert werden kann, wobei die Krümmungen der unterschiedlichen Rohlinge (10) derart gestaffelt werden, dass passend gestaffelte Rohlinge (10) für alle typischen Brillengläser (1,2) verfügbar sind.

10. Verfahren nach Anspruch 9, **dadurch gekennzeichnet, dass** die Staffelung der Rohlinge (10) derart ausgelegt wird, dass die Nachbearbeitungszeit der Rückseite (12) minimiert wird, indem der Materialabhub bei der Fertigung der Rezeptfläche (13) gering ist.

11. Verfahren nach einem der vorhergehenden Ansprüche, **dadurch gekennzeichnet, dass** die zwei Brillengläser (1,2) durch ein Waterjet- oder Laserverfahren oder durch Zerspanung, insbesondere Fräsen, aus den Rezeptlinsen (51,52) herausgetrennt werden.

12. Verfahren nach Anspruch 11, **dadurch gekennzeichnet, dass** beim Heraustrennen ein kleiner Bearbeitungsüberstand (16) am Brillenglas (1,2) belassen wird.

13. Verfahren nach Anspruch 12, **dadurch gekennzeichnet, dass** der Bearbeitungsüberstand (16) durch Schleifen und Polieren nachbearbeitet wird.

14. Verfahren nach einem der vorhergehenden Ansprüche, **dadurch gekennzeichnet, dass** die beiden Oberkanten (17) oder die beiden Unterkanten (18) der Brillengläser (1,2) vor der Fertigung aus den Rezeptlinsen (51,52) benachbart sind.

15. Verfahren nach einem der vorhergehenden Ansprüche, **dadurch gekennzeichnet, dass** der Rohling (10) derart in einer Werkzeugaufnahme (30) fixiert wird, dass die Brillengläser (1,2) nach der Herstellung aus den Rezeptlinsen (51,52) an der Werkzeugaufnahme (30) fixiert sind.
